# EUROPÄISCHE PATENTSCHRIFT

(11) **EP 2 622 366 B1**
(45) Veröffentlichungstag und Bekanntmachung des Hinweises auf die Patenterteilung: **06.03.2019**
(21) Anmeldenummer: 11743226.0
(22) Anmeldetag: 29.07.2011
(51) Int. Cl.: G01S 7/03, H01Q 1/32, H01Q 21/00, G01S 13/93

(54) **ANTENNENSYSTEM FÜR RADARSENSOREN**
ANTENNA SYSTEM FOR RADAR SENSORS
SYSTÈME D'ANTENNES POUR CAPTEURS RADAR

(30) Priorität: 27.09.2010 DE 102010041438
(43) Veröffentlichungstag der Anmeldung: 07.08.2013
(73) Patentinhaber: Robert Bosch GmbH, 70442 Stuttgart (DE)
(72) Erfinder: BINZER, Thomas, 70565 Stuttgart (DE); WALDSCHMIDT, Christian, 70197 Stuttgart (DE); HELLINGER, Raphael, 75181 Pforzheim (DE); HANSEN, Thomas, 31139 Hildesheim (DE)
(86) Internationale Anmeldenummer: PCT/EP2011/063075
(87) Internationale Veröffentlichungsnummer: WO 2012/041567

(56) Entgegenhaltungen:
- GB-A- 2 187 596
- US-A- 4 398 199
- US-A1- 2010 238 067

## Beschreibung

### Stand der Technik

Die Erfindung betrifft ein Antennensystem für Radarsensoren, mit mindestens einer planaren Gruppenantenne, die eine Speiseleitung und mehrere in die Speiseleitung integrierte Antennenelemente umfasst und bei dem die Gruppenantenne mehrere zueinander verlaufende Antennenspalten aufweist, die an einem Ende über eine Umwegleitung miteinander verbunden sind deren Länge so bemessen ist, dass die Antennenspalten insgesamt miteinander in Phase sind.

Ein Antennensystem dieser Art ist aus GB 2 187 596 A bekannt. Ähnliche Antennensysteme zeigen US 2010/238067 A1 und US 4 398 199 A.

Insbesondere befasst sich die Erfindung mit einer Antennensystem für Radarsensoren, die in Kraftfahrzeugen in Verbindung mit Fahrerassistenzsystemen eingesetzt werden, beispielsweise zur Ortung vorausfahrender Fahrzeuge in einem automatischen Abstandsregelsystem (ACC; Adaptive Cruise Control). Diese Radarsensoren arbeiten typischerweise mit einer Frequenz von 24 GHz oder 77 GHz.

Planare Antennen in Mikrostreifentechnologie haben bei diesen Anwendungen den Vorteil, dass sie verhältnismäßig kostengünstig herstellbar sind und eine flache Bauweise ermöglichen und dass keine Übergänge zwischen verschiedenen Leitungssystemen oder Leitungstypen erforderlich sind. Die Antennenelemente können wie die übrigen Schaltungskomponenten einfach durch entsprechende Mikrostreifenleiter auf einer Platine gebildet werden.

Bei einer Gruppenantenne, auch als Antennen-Array bezeichnet, wird die abzustrahlende Leistung so in die verschiedenen Antennenelemente eingespeist, dass sich durch Überlagerung und Interferenz der von den verschiedenen Antennenelementen emittierten Strahlung eine gewünschte Richtcharakteristik ergibt. Dazu müssen die Leistungen und Phasen der in die einzelnen Antennenelemente eingeleiteten Mikrowellen geeignet abgestimmt werden. In der Regel ist eine Richtcharakteristik mit einer schmalen Hauptkeule und weitgehend unterdrückten Nebenkeulen erwünscht. Da jedoch für den Radarsensor und damit auch für die Antennen nur ein begrenzter Raum zur Verfügung steht, lässt sich eine vollständige Unterdrückung der Nebenkeulen zumeist nicht erreichen.

Aufgrund von Einschränkungen bei der Gestaltung und Anordnung der Mikrostreifenleiter auf der Platine gelingt es zumeist auch nicht, die insgesamt über die Speiseleitung zugeführte Leistung vollständig auf die Antennenelemente aufzuteilen und über die Antennenelemente abzustrahlen. Zumeist verbleibt überschüssige Leistung auf der Speiseleitung und muss am Ende dieser Speiseleitung entweder abgestrahlt oder vernichtet werden. Die Abstrahlung der unerwünschten Leistung führt jedoch wieder zu ausgeprägteren Nebenkeulen. Eine Vernichtung der überschüssigen Leistung mit Hilfe spezieller Absorber hat den Nachteil, dass die Absorber zusätzliche Kosten verursachen und zusätzlichen Platz benötigen. Außerdem hat diese Lösung den Nachteil, das insgesamt höhere Leistungsverluste auftreten.

Bei einem herkömmlichen Radarsensor für Kraftfahrzeuge weist das Antennensystem zumeist mehrere Antennenspalten auf, die, wenn der Radarsensor im Fahrzeug eingebaut ist, vertikal verlaufen. Die mehreren Antennenspalten sind dann in der Horizontalen nebeneinander angeordnet. Die Phasenbeziehung und die Leistungsaufteilung zwischen den verschiedenen Antennenspalten bestimmt dann die Richtcharakteristik im Azimut, und die Phasenbeziehung und Leistungsaufteilung zischen den verschiedenen Antennenelementen (Patches) innerhalb einer Spalte bestimmen die Richtcharakteristik in der Elevation.

Man unterscheidet generell zwischen Antennenspalten mit einem separaten Speisenetzwerk, bei dem jedes einzelne Antennenelement über eine Zweigleitung mit der Speiseleitung verbunden ist, und Antennenspalten, bei denen die einzelnen Antennenelemente in die Speiseleitung integriert sind. Solche Antennenspalten werden auch als Serienspalten bezeichnet. Die Erfindung befasst sich speziell mit einer Antennensystem des letztgenannten Typs. Dieser Typ hat insbesondere bei einem 77GHz Radar, bei dem die Mikrowellen eine kleinere Wellenlänge haben, den Vorteil, dass eine kompaktere Anordnung der Antennenelemente auf der Platine ermöglicht wird. Die Phasenbeziehung zwischen den einzelnen Antennenelementen wird dann durch die Länge der Abschnitte der Speiseleitung bestimmt, die jeweils zwei benachbarte Antennenelemente miteinander verbinden. Die gewünschte Leistungsaufteilung lässt sich durch geeignete Wahl der Abmessungen der Patches erreichen, die die einzelnen Antennenelemente bilden. Wenn die Abstände zwischen den einzelnen Antennenelementen der Wellenlänge der Mikrowellen auf der Speiseleitung entsprechen, sind alle Antennenelemente in Phase, und die Hauptkeule ist rechtwinklig zur Platine orientiert. Wenn die Abstände größer oder kleiner sind als eine ganze Wellenlänge, bildet die Hauptkeule mit der Platine einen Winkel, der kleiner ist als 90°. Das lässt sich beispielsweise dazu nutzen, die Hauptkeule schräg abwärts auf die Fahrbahn zur richten, so dass die Antenne gewissermaßen auf die Fahrbahn "schielt". Das setzt allerdings voraus, dass am Ende der Speiseleitung kein nennenswerter Anteil der Mikrowellenleistung reflektiert wird, da sonst die reflektierte Welle zur Bildung einer (unerwünschten) Radarkeule führen würde, die in die entgegengesetzte Richtung "schielt".

### Offenbarung der Erfindung

Aufgabe der Erfindung ist es, eine Antennensystem für Radarsensoren zu schaffen, das verlustarm arbeitet und eine wirksame Unterdrückung von Nebenkeulen ermöglicht.

Diese Aufgabe wird erfindungsgemäß dadurch gelöst, dass eine primäre Antennenspalte der Gruppenantenne über eine gegabelte Umwegleitung mit zwei sekundären Antennenspalten verbunden ist, die symmetrisch beiderseits der primären Antennenspalte liegen, die Mikrowellenleistung an dem Ende, das der Umwegleitung entgegengesetzt ist, in die primäre Antennenspalte eingespeist wird, und die Mikrowellen in den sekundären Antennenspalten die entgegengesetzte Laufrichtung gegenüber der primären Antennenspalte aufweisen.

Die Mikrowellenleistung wird an dem Ende, das der Umwegleitung entgegengesetzt ist, in eine der mehreren Antennenspalten eingespeist. Diese Antennenspalte soll im folgenden als primäre Antennenspalte bezeichnet werden. Die Leistung, die am Ende der primären Antennenspalte noch übrig ist, braucht nun nicht reflektiert zu werden und auch nicht mit Hilfe eines Absorbers absorbiert zu werden, sondern wird über die Umwegleitung in die sekundären Antennenspalten eingeleitet und dann über die Antennenelemente dieser Antennenspalten abgestrahlt, und zwar mit einer Phasen- und Amplitudenbelegung, die die Richtcharakteristik nicht stört, sondern sogar noch verbessert. Auf diese Weise lässt sich eine wirksame Unterdrückung von Nebenkeulen bei minimalem Energieverlust erreichen. Da die mehreren Antennenspalten der Gruppenantenne miteinander in Phase sind, ergibt sich in der Richtung rechtwinklig zur Gruppenantenne, in der typischen Einbausituation also im Azimut, eine Charakteristik mit einer senkrecht auf der Platine stehenden Hauptkeule. Je größer die Anzahl der nebeneinander angeordneten Gruppenantennen ist (die jeweils zwei oder mehr Antennenspalten haben) desto besser wird die Radarstrahlung im Azimut gebündelt.

Vorteilhafte Ausgestaltungen und Weiterbildungen der Erfindung sind in den Unteransprüchen angegeben.

Da am Ende der Speiseleitung (d.h. am Ende der sekundären Antennenspalte oder der sekundären Antennenspalten) praktisch keine Leistung mehr reflektiert wird, lassen sich die Abstände zwischen den Antennenelementen so wählen, dass die Antenne auf die Fahrbahn schielt. Wenn die Abstände in der primären Antennenspalte kleiner sind als der Abstand, bei dem die Antennenelemente phasengleich angeregt würden, so müssen in der sekundären Antennenspalte oder den sekundären Antennenspalten die Abstände entsprechend größer sein als dieser Abstand, da die Mikrowellen hier die entgegengesetzte Laufrichtung haben. Die einzelnen Antennenelemente in den beiden Antennenspalten werden dann zwar nicht exakt gleichphasig angeregt, doch ist die über sämtliche Antennenelemente der Antennenspalte gemittelte Phase nach wie vor für beide Antennenspalten gleich.

Es ist auch möglich, dass sich an die sekundären Antennenspalte bzw. an jede sekundären Antennenspalte noch ein oder zwei tertiäre Antennenspalten anschließen, so dass die Antennenspalten insgesamt ein mäanderförmige Konfiguration bilden.

Im folgenden werden Ausführungsbeispiele anhand der Zeichnung näher erläutert.

Es zeigen:
- Fig. 1: eine Gruppenantenne eines Antennensystems, an der ein Teilmerkmal der Erfindung erläutert wird;
- Fig. 2: eine schematische Seitenansicht der Gruppenantenne nach Fig. 1, zusammen mit einem Diagramm zur Illustration der Richtcharakteristik in der Elevation;
- Fig. 3 bis 4: Antennensysteme gemäß Ausführungsformen der Erfindung; und
- Fig.: Eine Skizze zur Erläuterung einer Weiterbildung der Erfindung.

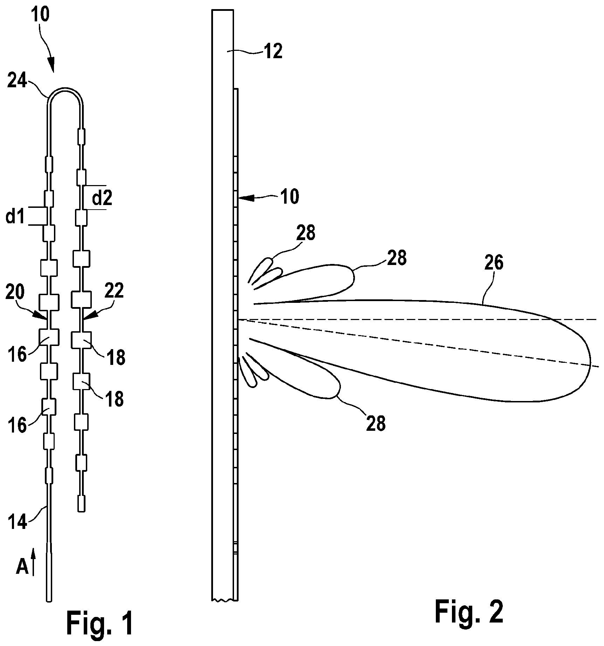

In Fig. 1 ist eine einzelne Gruppenantenne 10 eines planaren Antennensystems gezeigt, das in Mikrostreifentechnik auf einem Substrat 12 (Fig. 2) gebildet ist. Die Gruppenantenne 10 weist eine Speiseleitung 14 auf, in die mehrere als Patches ausgebildete Antennenelemente 16, 18 integriert sind, und bildet zwei parallele, in Einbaustellung vertikal verlaufende Antennenspalten 20, 22, die an einem Ende, im gezeigten Beispiel am oberen Ende, durch eine Umwegleitung 24 miteinander verbunden sind.

Ein nicht gezeigter Oszillator, der ebenfalls auf der Platine 12 angeordnet sein kann, erzeugt ein Mikrowellensignal, das in das untere Ende der Antennenspalte 20 eingeleitet wird und sich in Richtung des Pfeils A in der Speiseleitung 14 ausbreitet. Der Antennenspalte 20 (mit den Antennenelementen 16) wird deshalb als primäre Antennenspalte bezeichnet, während die Antennenspalte 22 (mit den Antennenelementen 18) als sekundäre Antennenspalte bezeichnet wird.

Die Länge der Antennenelemente 16, 18 in der Richtung parallel zur Speiseleitung 14 ist so auf die Wellenlänge der Mikrowellen abgestimmt, dass die Antennenelemente zu Resonanzschwingungen angeregt werden und die Mikrowellen als Radarstrahlung emittieren. Durch Interferenz zwischen den von den verschiedenen Antennenelementen 16 emittierten Radarwellen kommt es zur Ausbildung einer Richtcharakteristik (in der Elevation), wie sie in Fig. 2 dargestellt einer Richtcharakteristik (in der Elevation), wie sie in Fig. 2 dargestellt ist, mit einer Hauptkeule 26 und weitgehend unterdrückten Nebenkeulen 28.

Die Abstände d1 zwischen den aufeinanderfolgenden Antennenelementen 16 in der primären Antennenspalte 20 sind so gewählt, dass sie etwas kleiner sind als der Abstand, bei dem die Resonanzschwingungen in den einzelnen Antennenelementen 16 in Phase wären. Das hat zur Folge, dass die Hauptkeule 26 nicht senkrecht auf der Platine 12 steht, sondern gegenüber dieser geneigt ist, bei einem Radarsensor für Kraftfahrzeuge beispielsweise abwärts zur Fahrbahnoberfläche. In der sekundären Antennenspalte 22 sind dagegen die Abstände d2 zwischen den benachbarten Antennenelementen 18 so gewählt, dass sie größer sind als der Abstand, der einer gleichphasigen Erregung entspräche. Da jedoch in dieser Antennenspalte 22 das Mikrowellensignal in der entgegengesetzten Richtung (von oben nach unten) läuft, haben die Antennenelemente 18 die gleichen Phasendifferenzen wie die Antennenelemente 16. Deshalb trägt auch die von den Antennenelementen 18 in der sekundären Antennenspalte 22 emittierte Strahlung zu der abwärts geneigten Hauptkeule 26 bei.

Das untere Ende der sekundären Antennenspalte 22 ist im gezeigten Beispiel als offenes Ende ausgebildet, so dass Mikrowellen, die hier eintreffen würden, wieder reflektiert würden. Da jedoch der weitaus größte Teil der Mikrowellenleistung, die die primäre Antennenspalte 20 passiert hat, über die Antennenelemente 18 der sekundären Antennenspalte 22 abgestrahlt wird, kommt es am Ende der Speiseleitung kaum zu störenden Reflektionen.

Die Abmessungen der Antennenelemente 16, 18 in der Richtung quer zur Speiseleitung 14 bestimmen den Anteil der Mikrowellenleistung, der von dem betreffenden Antennenelement emittiert wird. Diese Abmessungen sind so gewählt, dass die Nebenkeulen 28 gut unterdrückt werden.

Die Länge der Umwegleitung 24 ist so gewählt, dass die von den beiden Antennenspalten 20, 22 emittieren Radarwellen insgesamt in Phase sind. Das heißt, die über sämtliche Antennenelemente 16 gemittelte Phase der primären Antennenspalte 20 ist gleich der über sämtliche Antennenelemente 18 gemittelten Phase der sekundären Antennenspalte 22. Insbesondere bedeutet dies, dass die Antennenelemente, die jeweils in der Mitte der betreffenden Antennenspalte liegen und über die die meiste Leistung abgestrahlt wird, praktisch gleichphasig erregt werden. Im Azimut, also in horizontaler Richtung, ergibt sich daher durch Interferenz der von den beiden Antennenspalten emittierten Strahlungsanteile eine Richtcharakteristik mit einer Hauptkeule, die senkrecht auf der Platine 12 steht.

In der Praxis können mehrere parallele Gruppenantennen 10 nebeneinander auf der Platine 12 angeordnet sein. Bei gleichphasiger Ansteuerung sämtlicher Gruppenantennen lässt sich so eine Bündelung der Radarstrahlung im Azimut erreichen. Auch dabei kann durch geeignete Leistungsaufteilung auf die verschiedenen Gruppenantennen 10 eine weitgehende Unterdrückung von Nebenkeulen erreicht werden. Das Ausmaß der Bündelung der Radarstrahlung im Azimut ist von der Anzahl der Gruppenantennen 10 abhängig und wird so gewählt, dass die Radarstrahlung im Azimut einen hinreichend großen Winkelbereich überstreicht. Natürlich lässt sich durch Änderung der Phasenbelegung der einzelnen Gruppenantennen 10 auch im Azimut eine Ablenkung der Hauptkeule zur einen oder anderen Seite erreichen.

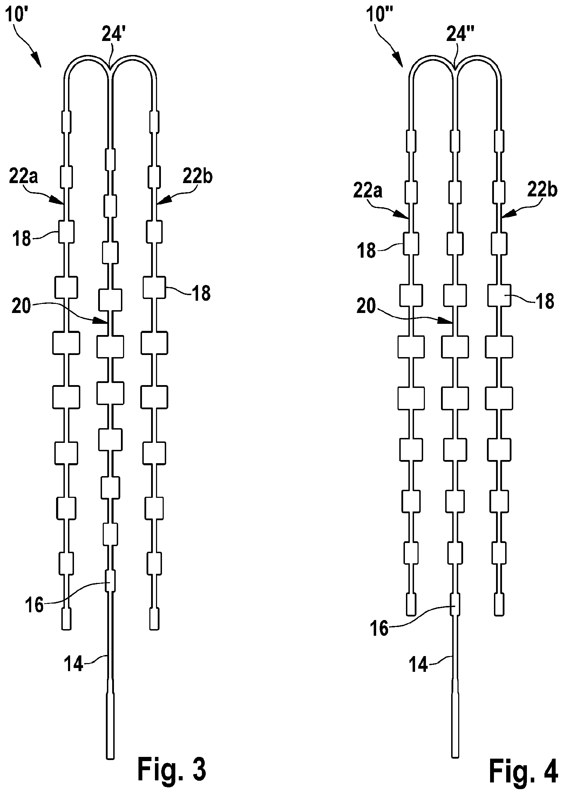

Fig. 3 zeigt eine Gruppenantenne 10' eines Antennensystems gemäß einem Ausführungsbeispiel der Erfindung. Diese Gruppenantenne weist zwei sekundäre Antennenspalten 22a, 22b auf, die symmetrisch auf beiden Seiten der primären Antennenspalte 20 liegen. Die Speiseleitung 14 mündet am Ende der primären Antennenspalte 20 in eine gegabelte Umwegleitung 24', so dass die verbliebene Mikrowellenleistung gleichmäßig auf zwei sekundäre Antennenspalten 22a, 22b aufgeteilt wird. Auf diese Weise kann noch ein größerer Anteil der Mikrowellenleistung abgestrahlt und die Reflektion an den Enden der Antennenspalten 22a und 22b entsprechend verringert werden. Zugleich wird die Unterdrückung von Nebenkeulen 28 in der Elevation sowie auch die Richtcharakteristik im Azimut verbessert. Die Abstände zwischen den Antennenelementen 18 in den sekundären Antennenspalten 22a und 22b sind hier die gleichen wie bei dem Ausführungsbeispiel nach Fig. 1, so dass man auch hier die abwärts zur Fahrbahn geneigte Hauptkeule 26 gemäß Fig. 2 erhält.

Fig. 4 zeigt dagegen eine Gruppenantenne 10" gemäß einem weiteren Ausführungsbeispiel, bei dem die Abstände zwischen den Antennenelementen 18 in den sekundären Antennenspalten 22a, 22b mit den Abständen zwischen den Antennenelementen 16 in der primären Antennenspalte 20 übereinstimmen und so gewählt sind, dass sämtliche Antennenelemente gleichphasig erregt werden. In diesem Fall ist daher die Hauptkeule auch in Elevation rechtwinklig zur Platine 12 orientiert. Nebenkeulen werden bei dieser Ausführungsform ebenso wirksam unterdrückt wie bei den Ausführungsformen nach Fig. 1 und 3.

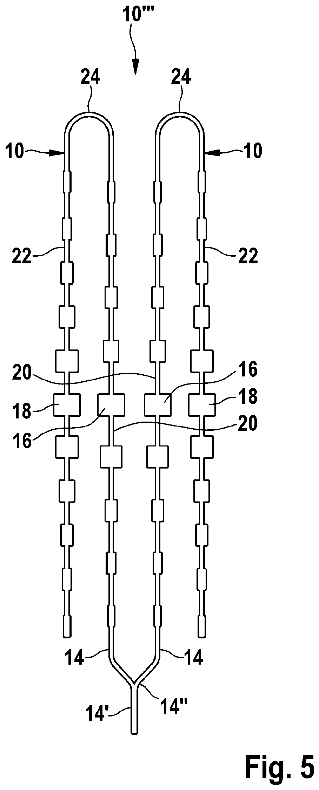

Fig. 5 zeigt ein Antennensystem 10"', bei dem zwei Gruppenantennen 10, die jeweils wie in Fig. 1 aufgebaut sind, symmetrisch zu einander angeordnet und über eine Verzweigung 14" an eine gemeinsame Speiseleitung 14' angeschlossen sind. Mit dieser Ausführungsform lässt sich eine Bündelung der Radarstrahlung im Azimut bei gleichzeitig weitestgehender Unterdrückung von Nebenkeulen erreichen.

## Patentansprüche

1. Antennensystem für Radarsensoren, mit mindestens einer planaren Gruppenantenne (10; 10'; 10"), die eine Speiseleitung (14) und mehrere in die Speiseleitung integrierte Antennenelemente (16, 18) umfasst und bei dem die Gruppenantenne (10; 10'; 10") mehrere parallel zueinander verlaufende Antennenspalten (20, 22; 22a, 22b) aufweist, die an einem Ende über eine Umwegleitung (24; 24') miteinander verbunden sind deren Länge so bemessen ist, dass die Antennenspalten insgesamt miteinander in Phase sind, wobei eine primäre Antennenspalte (20) der Gruppenantenne über eine gegabelte Umwegleitung (24'; 24") mit zwei sekundären Antennenspalten (22a, 22b) verbunden ist, die symmetrisch beiderseits der primären Antennenspalte (20) liegen, die Mikrowellenleistung an dem Ende, das der Umwegleitung entgegengesetzt ist, in die primäre Antennenspalte eingespeist wird, und die Mikrowellen in den sekundären Antennenspalten (22a, 22b) die entgegengesetzte Laufrichtung gegenüber der primären Antennenspalte (20) aufweisen.

2. Antennensystem nach Anspruch 1, bei dem zwei planare Gruppenantennen (10), über eine Verzweigung (14") parallel und symmetrisch zusammengeschaltet sind.

3. Antennensystem nach einem der vorstehenden Ansprüche, bei dem die Abstände (d1) zwischen benachbarten Antennenelementen (16) in einer Antennenspalten (20) von den Abständen (d2) zwischen benachbarten Antennenelementen (18) in mindestens einer anderen Antennenspalte (22; 22a, 22b) verschieden sind und bei dem die Abstände (d1, d2) zwischen benachbarten Antennenelementen (16, 18) in den verschiedenen Antennenspalten (20, 22; 22a, 22b) je nach Laufrichtung des Mikrowellensignals in den betreffenden Antennenspalten so gewählt sind, dass die mehreren Antennenspalten (20, 22; 22a, 22b) der Gruppenantenne asymmetrische, jedoch untereinander im wesentlichen gleiche Richtcharakteristiken haben.

4. Radarsensor für Kraftfahrzeuge, mit einem Antennensystem nach einem der vorstehenden Ansprüche, bei dem die in die Gruppenantenne (10; 10'; 10") eingekoppelte Mikrowellenleistung so auf die Anzahl und Dimensionierung der insgesamt in der Gruppenantenne vorhandenen Antennenelemente (16, 18) abgestimmt ist, dass die Mikrowellenleistung vollständig, allenfalls bis auf einen vernachlässigbaren Rest, über die Antennenelemente (16, 18) abgestrahlt wird.

## Claims

1. Antenna system for radar sensors, having at least one planar group antenna (10; 10'; 10"), which comprises a feed line (14) and a plurality of antenna elements (16, 18) integrated in the feed line, and in which the group antenna (10; 10'; 10") has a plurality of antenna gaps (20, 22; 22a, 22b) extending parallel to one another, which are connected to one another at one end via a phasing line (24; 24') and the length of which is dimensioned such that the antenna gaps overall are in phase with one another, wherein a primary antenna gap (20) of the group antenna is connected via a forked phasing line (24'; 24") to two secondary antenna gaps (22a, 22b), which are located symmetrically on both sides of the primary antenna gap (20), and the microwave power is fed into the primary antenna gap at the end which is opposite to the phasing line, and the microwaves in the secondary antenna gaps (22a, 22b) have the opposite propagation direction with respect to the primary antenna gap (20).

2. Antenna system according to Claim 1, in which two planar group antennas (10) are connected together in parallel and symmetrically via a branch (14").

3. Antenna system according to one of the preceding claims, in which the distances (d1) between adjacent antenna elements (16) in an antenna gap (20) are different from the distances (d2) between adjacent antenna elements (18) in at least one other antenna gap (22; 22a, 22b), and in which the distances (d1, d2) between adjacent antenna elements (16, 18) in the various antenna gaps (20, 22; 22a, 22b) are chosen in the relevant antenna gaps, depending on the propagation direction of the microwave signal, such that the plurality of antenna gaps (20, 22; 22a, 22b) of the group antenna have directional characteristics which are asymmetrical but substantially the same as one another.

4. Radar sensor for motor vehicles, having an antenna system according to one of the preceding claims, in which the microwave power coupled into the group antenna (10; 10'; 10") is matched to the number and dimensioning of the antenna elements (16, 18) which are overall present in the group antenna, so that the microwave power is emitted completely via the antenna elements (16, 18), possibly apart from a negligible residue.

## Revendications

1. Système d'antenne pour capteurs radar, comportant au moins une antenne réseau planaire (10 ; 10' ; 10") qui comprend une ligne d'alimentation (14) et plusieurs éléments d'antenne (16, 18) intégrés dans la ligne d'alimentation, et dans lequel l'antenne réseau (10 ; 10' ; 10") comporte plusieurs brins d'antenne (20, 22 ; 22a, 22b) parallèles entre eux qui sont connectés à une extrémité par une ligne de contournement (24 ; 24') dont la longueur est choisie de manière à ce que les brins d'antenne soient globalement en phase entre eux, dans lequel un brin d'antenne primaire (20) de l'antenne réseau est connecté par l'intermédiaire d'une ligne de contournement bifurquée (24' ; 24") à deux brins d'antenne secondaires (22a, 22b) situés symétriquement des deux côtés du brin d'antenne primaire (20), la puissance micro-onde à l'extrémité opposée de la ligne de contournement est injectée dans le brin d'antenne primaire, et les micro-ondes présentes dans les brins d'antenne secondaires (22a, 22b) présentent une direction de propagation opposée à celle du brin d'antenne primaire (20) .

2. Système d'antenne selon la revendication 1, dans lequel deux antennes réseau planaires (10) sont interconnectées en parallèle et symétriquement par une dérivation (14").

3. Système d'antenne selon l'une des revendications précédentes, dans lequel les distances (d1) entre des éléments d'antenne adjacents (16) dans un brin d'antenne (20) sont différentes des distances (d2) entre des éléments d'antenne (18) dans au moins un autre brin d'antenne (22 ; 22a, 22b) et dans lequel les distances (d1, d2) entre des éléments d'antenne adjacents (16, 18) dans les différents brins d'antenne (20, 22 ; 22a, 22b) sont choisies en fonction de la direction de propagation du signal micro-onde dans les brins d'antenne concernés de manière à ce que plusieurs brins d'antenne (20, 22 ; 22a, 22b) de l'antenne réseau présentent des caractéristiques d'orientation asymétriques mais sensiblement identiques.

4. Capteur radar pour véhicules automobiles, comportant un système d'antenne selon l'une des revendications précédentes, dans lequel la puissance micro-onde appliquée à l'antenne réseau (10 ; 10' ; 10") est adaptée au nombre et au dimensionnement de l'ensemble des éléments d'antenne (16, 18) présents dans l'antenne réseau de manière à ce que la puissance micro-onde soit entièrement rayonnée par l'intermédiaire des éléments d'antenne (16, 18), excepté éventuellement un reste négligeable.
